# EUROPÄISCHE PATENTSCHRIFT

(11) **EP 1 432 900 B1**
(45) Veröffentlichungstag und Bekanntmachung des Hinweises auf die Patenterteilung: **11.05.2005**
(21) Anmeldenummer: 02769866.1
(22) Anmeldetag: 13.08.2002
(51) Int. Cl.: F02D 41/14

(54) **BREITBAND-LAMBDASONDE MIT VERBESSERTEM STARTVERHALTEN**
WIDE BAND LAMBDA PROBE HAVING IMPROVED STARTING BEHAVIOUR
SONDE LAMBDA LARGE BANDE PRESENTANT UN COMPORTEMENT AMELIORE AU DEMARRAGE

(30) Priorität: 26.09.2001 DE 10147390
(43) Veröffentlichungstag der Anmeldung: 30.06.2004
(73) Patentinhaber: ROBERT BOSCH GMBH, 70442 Stuttgart (DE)
(72) Erfinder: STRASSNER, Walter, 73614 Schorndorf (DE); DIEHL, Lothar, 70839 Gerlingen (DE); ANDORFER, Andreas, Shanghai 20126 (CN)
(86) Internationale Anmeldenummer: PCT/DE2002/002959
(87) Internationale Veröffentlichungsnummer: WO 2003/027462

(56) Entgegenhaltungen:
- DE-A- 2 559 046
- DE-C- 19 728 926
- US-A- 4 172 432
- US-A- 4 359 029
- US-A- 5 675 069
- US-A- 6 073 083

## Beschreibung

Die Erfindung betrifft allgemein das Gebiet der Abgasnachbehandlung insbesondere bei Brennkraft-getriebenen Kraftfahrzeugen und im Speziellen ein Verfahren und ein Steuergerät zum Betrieb einer Breitband-Lambdasonde.

Eine Lambda-Regelung ist, in Verbindung mit einem Katalysator, heute das wirksamste Abgasreinigungsverfahren für den Ottomotor. Erst im Zusammenspiel mit heute verfügbaren Zünd- und Einspritzsystemen können sehr niedrige Abgaswerte erreicht werden. Besonders wirkungsvoll ist der Einsatz eines Dreiwege- oder Selektiv-Katalysators. Dieser Katalysatortyp hat die Eigenschaft, Kohlenwasserstoffe, Kohlenmonoxid und Stickoxide bis zu mehr als 98 % abzubauen, falls der Motor in einem Bereich von etwa 1% um das stöchiometrische Luft-Kraftstoff-Verhältnis mit LAMBDA = 1 betrieben wird. Dabei gibt LAMBDA an, wieweit das tatsächliche vorhandene Luft-Kraftstoff-Gemisch von dem Wert LAMBDA = 1 abweicht, der einem zur vollständigen Verbrennung theoretisch notwendigen Massenverhältnis von 14,7 kg Luft zu 1 kg Benzin entspricht, d.h. LAMBDA ist der Quotient aus zugeführter Luftmasse und theoretischem Luftbedarf.

Bei der Lambda-Regelung wird das jeweilige Abgas gemessen und die zugeführte Kraftstoffmenge entsprechend dem Messergebnis mittels bspw. des Einspritzsystems sofort korrigiert. Als Messfühler wird eine Lambda-Sonde verwendet, die exakt bei LAMBDA = 1 einen Spannungssprung aufweist und so ein Signal liefert, das anzeigt, ob das Gemisch fetter oder magerer als LAMBDA = 1 ist. Die Wirkungsweise der Lambda-Sonde beruht auf dem Prinzip einer galvanischen Sauerstoff-Konzentrationszelle mit einem Festkörperelektrolyt.

Als Zweipunktsonden ausgeführte Lambda-Sonden arbeiten in an sich bekannter Weise nach dem Nernst-Prinzip basierend auf einer Nernst-Zelle. Der Festkörperelektrolyt besteht aus zwei durch eine Keramik getrennte Grenzflächen. Das verwendete Keramikmaterial wird bei etwa 350° C für Sauerstoffionen leitend, so dass dann bei unterschiedlichem Sauerstoffanteil auf beiden Seiten der Keramik zwischen den Grenzflächen die sogenannte Nernstspannung erzeugt wird. Diese elektrische Spannung ist ein Maß für den Unterschied des Sauerstoffanteils zu beiden Seiten der Keramik. Da der Restsauerstoffgehalt im Abgas eines Verbrennungsmotors in starkem Maße vom Luft-Kraftstoff-Verhältnis des dem Motor zugeführten Gemisches abhängig ist, ist es möglich, den Sauerstoffanteil im Abgas als Maß für das tatsächlich vorliegende Luft-Kraftstoff-Verhältnis heranzuziehen.

Die von der Lambda-Sonde je nach Sauerstoffanteil im Abgas abgegebene Sondenspannung erreicht bei fettem Gemisch (LAMBDA < 1) 800 - 1000 mV, bei magerem Gemisch (LAMBDA > 1) werden noch etwa 100 mV erreicht. Der Übergang vom fetten zum mageren Bereich liegt bei 450 - 500 mV. Bei stöchiometrischem Verhältnis von Luft zu Kraftstoff (Lambda = 1) ergibt sich eine Sondenspannung von 450 mV. Die angegebenen Werte gelten für eine Arbeitstemperatur des Keramikkörpers von ca. 600° C, so dass dieser beim Betrieb der Lambda-Sonde entsprechend zu heizen ist.

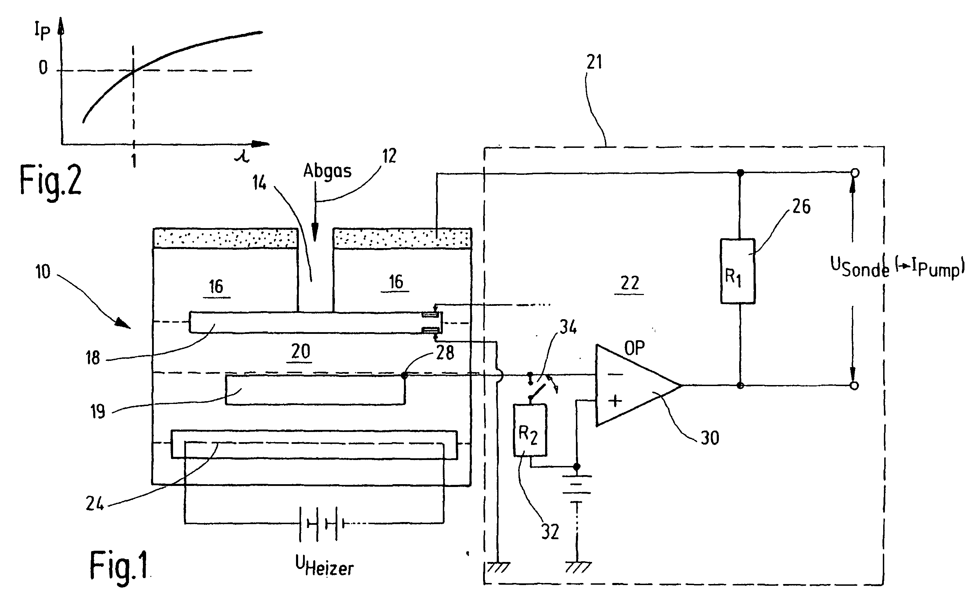

Die genannte stufenförmige Spannungscharakteristik bei den vorbeschriebenen Lambda-Sonden erlaubt eine Regelung nur in einem engen Wertebereich um LAMBDA = 1 herum. Diese Sonden werden daher auch als LAMBDA=1-Sprungsonden bezeichnet. Eine deutliche Erweiterung dieses Messbereichs auf LAMBDA zwischen 0,7 und 4 erlauben die sogenannten Breitband-Lambda-Sonden (Fig. 1), bei denen, ergänzend zu der Nernst-Zelle, eine zweite elektrochemische Zelle, die sogenannte Pumpzelle, integriert ist. Wie im nachfolgenden figurativen Teil beschrieben, wird eine an der Pumpzelle anliegende Spannung so geregelt, dass in einem Hohlraum bzw. Messspalt konstant LAMBDA = 1 gilt. Der dabei induzierte elektrische Pumpstrom ist proportional der Sauerstoffkonzentration, bzw. bei Werten kleiner Null proportional dem O2-Bedarf entsprechend der einströmenden Kraftstoffkonzentration, und somit ein Maß für den Wert von LAMBDA im Abgas.

Bei den zuerst beschriebenen LAMBDA=1-Sprungsonden ist weiterhin bekannt, in der Startphase des Motors die Sondenspannung mit einer Vorsteuerung über einen Spannungsteiler auf 450 mV zu halten, solange die Sonde noch zu kalt ist und noch keine dem Sauerstoffgehalt entsprechende Nernstspannung als Sonden-Ausgangssignal vorliegt. Denn in kaltem Zustand besitzt die Sonde noch einen hohen Innenwiderstand. Eine entsprechende Ansteuer- und Answerteschaltung ist etwa in US 5 675 069 gezeigt.

Demgegenüber werden die bekannten Breitband-Lambda-Sonden mit einer Auswerteschaltung betrieben, welche die Nernstspannung mit einer intern erzeugten Spannung von 450 mV vergleicht. Siehe beispielsweise US 6 073 083. Sobald eine Abweichung vorliegt, wird diese in der Schaltung verstärkt und als Pumpstrom in die Pumpzelle eingespeist. Dadurch wird Sauerstoff in bzw. aus dem Hohlraum gepumpt und die Nernstspannung stabilisiert sich auf 450 mV. Nachteilig bei diesen Sonden ist somit, dass beim Start des Motors bzw. der Sonde die Nernstspannung von 0 V erst langsam auf 450 mV ansteigt, auch wenn das Abgas die ganze Zeit über LAMBDA = 1 hat. Aufgrund dieser Abweichung legt der Verstärker die volle positive Pumpspannung an die Pumpzelle an. Erst wenn die Sonde sich genügend erwärmt hat, setzt ein großer Pumpstrom ein, der den Hohlraum entleert, obwohl die richtige Gaskonzentration LAMBDA = 1 bereits vom Start an vorlag. Das Ausgangssignal zeigt demnach einen Überschwinger in Richtung mager, der die Regelung erheblich stört. Anschließend muss der Sauerstoff wieder aufgefüllt werden, wobei sich wiederum ein kleinerer Überschwinger in Richtung fett zeigt.

Der vorliegenden Erfindung liegt deshalb die Aufgabe zugrunde, ein eingangs genanntes Verfahren und ein Steuergerät mit einer Breitband-Sonde anzugeben, welche in der Startphase des Motors bzw. der Kaltphase der Breitband-Sonde eine vorbeschriebene Störung der Lambda-Regelung vermeiden.

Diese Aufgabe wird gelöst durch die Merkmale der unabhängigen Ansprüche. Vorteilhafte Ausgestaltungen bzw. Weiterbildungen sind Gegenstand der Unteransprüche.

Die Besonderheit der Erfindung liegt darin, die Nernstspannung mittels einer Vorsteuerung auf den Nennwert der Referenzspannung, bspw. 450 mV, zu halten, und zwar solange, bis die Nernstspannung ein Maß für die Sauerstoffkonzentration im Hohlraum der Pumpzelle der Breitbandsonde ist. Die Vorsteuerung wird bevorzugt durch einen ohmschen Widerstand realisiert. Hierbei wird ein Anschluss einer Referenzelektrode im Steuergerät über den Widerstand an die von einer Auswerteschaltung erzeugte Referenzspannung gelegt, mit der sie über einen Komparator der Schaltung verglichen wird. Der Widerstand wird so ausgelegt, dass die Nernstspannung nahe dem Nennwert der Referenzspannung bleibt, solange die Nernstspannung bei LAMBDA = 1 noch nicht den Nennwert beträgt. Hierbei wird ein Widerstand im Bereich von 1 - 100 kOhm, vorzugsweise 10 kOhm, verwendet.

Die Erfindung ermöglicht demnach einen Betrieb einer Breitband-Lambda-Sonde mit einem gegenüber dem Stand der Technik verbesserten Startverhalten. Zum Einen werden alle frühen Pumpströme, die nur auf das falsche Nernstsignal zurückzuführen sind, vermieden. Echte Konzentrationsabweichungen werden aufgrund der hohen Verstärkung der bei diesen Sensortypen vorgesehenen Auswerteschaltung dennoch schnell ausgeregelt. Zudem werden komplizierte Ausblendungen des Sonden-Ausgangssignals oder ein Abschalten der Pumpspannung vermieden.

Im Gegensatz zu der bei LAMBDA=1-Sprungsonden vorgesehenen Vorsteuerung wird die aufgrund der genannten hohen Verstärkung bewirkte extreme Reaktion der Sonde mit hohen Pumpspannungen wirksam vermieden. Ferner wird der Einfluss der gepumpten Referenz als "fette" Vorsteuerung vermindert.

In Kombination mit einer ebenfalls gepumpten Referenz können die Funktionen Vorsteuerung und gepumpte Referenz in einer Funktionseinheit vereinigt werden, indem eine Spannung geringfügig über 450 mV gewählt wird. Da für die Innenwiderstandsmessung der Nernstzelle nur der Wechselspannungsanteil ausgewertet wird, ergibt sich auch in diesem Fall keine Regelstörung.

Die Erfindung wird nachfolgend, unter Heranziehung der beigefügten Zeichnungen, anhand eines Ausführungsbeispiels eingehender erläutert. Dabei zeigen
- Fig. 1: schematisiert ein Ausführungsbeispiel einer erfindungsgemäßen Breitband-Lambda-Sonde;
- Fig. 2: einen typischen Verlauf des Pumpstroms I_Pump als Funktion von LAMBDA in einer Breitband-Lambda-Sonde;
- Fig. 3a - c: typische Spannungsverläufe der Nernstspannung U_Nernst (a), der Pumpspannung U_Pump (b) und des Pumpstroms I_Pump (c) nach dem Stand der Technik;
- Fig. 4a - c: den Figuren 3a - c vergleichbare Spannungs- und Stromverläufe bei einer erfindungsgemäßen Vorsteuerung bei LAMBDA = 1; und
- Fig. 5: ein typisches Kombinationsnetzwerk zur Verwirklichung der erfindungsgemäßen Vorsteuerung.

Bei der in der Fig. 1 gezeigten Breitband-Lambda-Sonde 10 gelangt Abgas 12 durch eine kleine Öffnung 14 einer Pumpzelle 16 in den eigentlichen Messraum 18 einer Nernstzelle 20, den als Diffusionsbarriere wirkenden sogenannten "Diffusionsspalt". An die Nernstzelle 20 schließt sich ein Referenzgasraum 19 an, in dem ein Sauerstoff-Referenzgas enthalten ist. In dem Messraum 18 wird stets ein stöchiometrisches Luft-Kraftstoff-Verhältnis eingestellt. Eine in einem Steuergerät 21 oder dergleichen angeordnete Auswerte- und Regelschaltung 22 regelt eine an der Pumpzelle 16 anliegende Pumpspannung U_Pump so, dass die Zusammensetzung des Gases im Messraum 18 konstant bei LAMBDA = 1 liegt. Bei magerem Abgas 12 pumpt die Pumpzelle 16 Sauerstoff vom Messraum 18 nach außen. Bei fettem Abgas 12 wird dagegen der Sauerstoff aus dem Abgas 12 der Umgebung in den Messraum 18 gepumpt und dadurch die Richtung des elektrischen Pumpstroms I_Pump umgekehrt. Der Pumpstrom ist dabei proportional zur Sauerstoffkonzentration bzw. dem Sauerstoffbedarf. So ist der Pumpstrom I_Pump ein Maß für LAMBDA im Abgas. Ein integrierter Heizer 24 sorgt für eine Betriebstemperatur von mindestens 600° C, welche nach einem Kaltstart allerdings erst nach einer gewissen Vorheizzeit erreicht wird.

Die Einstellung des Pumpstroms erfolgt über die Auswerte- und Regelschaltung 22, welche die Nernstspannung U_Nernst mit einer intern erzeugten Referenzspannung U_Ref von 450 mV vergleicht. Sobald eine Abweichung Delta(U_Nernst, U_Ref) vorliegt, wird diese Abweichung in der Schaltung 22 verstärkt und als der Pumpstrom I_Pump in die Pumpzelle 16 eingespeist. Dadurch wird Sauerstoff in bzw. aus dem Messraum 18 gepumpt und die Nernstspannung U_Nernst stabilisiert sich auf 450 mV. Der notwendige Pumpstrom I_Pump oder die über einen Widerstand (R1) 26 abfallende Ausgangsspannung U_Sonde wird als Ausgangssignal der Sonde 10 ausgewertet.

In der Auswerteschaltung 22 ist zwischen einer Referenzelektrode 28 bzw. dem negativen Pol des als Komparator geschalteten Operationsverstärkers (OP) 30 und dem positiven Pol des OP 30 ein Widerstand (R2) 32 von 10 kOhm zwischengeschaltet. Dadurch ist gewährleistet, dass die Nernstspannung U_Nernst auf einen Wert nahe 450 mV gezogen wird, solange die Nernstspannung bei LAMBDA = 1 noch nicht 450 mV beträgt.

Es ist anzumerken, dass zum Betrieb einer Breitband-Sonde 10 mit gepumpter Referenz die Referenzelektrode über einen Festwiderstand von z.B. 100 kOhm an +5V gelegt wird, um über die Nernstzelle 20 dem Referenzgasraum 19 ständig Sauerstoff zuzuführen.

Das Ausgangssignal I_Pump wird an eine nicht gezeigte weitere elektronische Steuerung übermittelt, welche ihrerseits einem Gemischbildner, bspw. eine Einspritzanlage oder einen elektronisch geregelten Vergaser, über ein Steuersignal signalisiert, ob das Gemisch angefettet oder abgemagert werden muss. Ist das Gemisch zu mager, wird mehr Kraftstoff zugegeben; ist das Gemisch zu fett, wird die dem Motor zugeführte Kraftstoffmenge wieder reduziert.

Ein typischer qualitativer Verlauf des Pumpstroms I_Pump als Funktion von LAMBDA ist in der Fig. 2 gezeigt. Bei magerem Abgas stellt sich ein positiver Pumpstrom ein, um im Messraum bzw. Diffusionsspalt eine stöchiometrische Zusammensetzung einzuhalten. Bei fettem Abgas ist dagegen ein negativer Pumpstrom vorhanden. Da man hier nicht mehr von der stufenförmigen Spannungscharakteristik der Nernst-Zelle abhängig ist, kann LAMBDA in einem Bereich von 0,7 bis unendlich stetig gemessen werden. Eine Messung für LAMBDA gleich unendlich wird bspw. für den Schubabgleich benötigt.

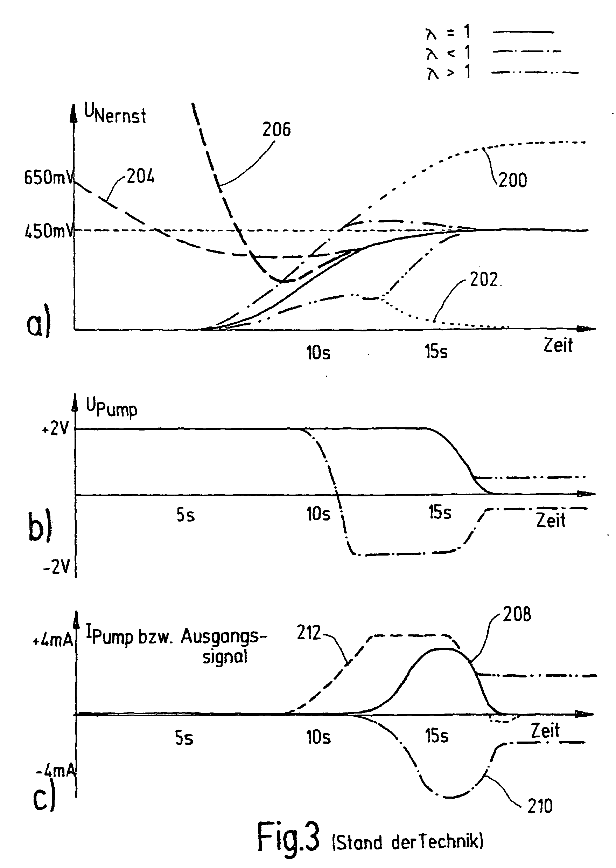

Die Figuren 3a - c zeigen bei einer im Stand der Technik bekannten Breitband-Sonde typischerweise auftretende Spannungsverläufe der Nernstspannung U_Nernst (a) ohne Vorsteuerung bei LAMBDA = 1 kurz nach dem Starten des Motors bzw. der Sonde, d.h. bei noch kalter Sonde, sowie der Pumpspannung U_Pump (b) und des Pumpstroms I_Pump (c).

In der Fig. 3a sind die bei drei qualitativ unterschiedlichen LAMBDA-Werten sich ergebenden Spannungsverläufe für U_Nernst wiedergegeben, wobei die durchgezogene Linie die mit gepumpter Referenz bei Lambda = 1 sich ergebende Nernstspannung darstellt, bei der das Signal mit einer positiven Batteriespannung startet. Das entsprechende von U_Batt kommende Signal ist mit 206 bezeichnet. Bei den übrigen (einfach und zweifach gestrichpunktet dargestellten) Messkurven geht die Nernstspannung zunächst auch von dem Wert 0 V aus. Zusätzlich sind bei den zeitlich ausklingenden Messkurven zum Vergleich die ohne Regelung sich ergebenden Verläufe der Nernstspannung als gepunktete Kurven 200, 202 eingezeichnet.

Wie in der Fig. 3a auch zu ersehen, steigt die Nernstspannung beim Start der Sonde ausgehend von 0 V erst langsam auf 450 mV an, auch wenn das Abgas die ganze Zeit LAMBDA = 1 hat. Durch diese Abweichung legt der Differenzverstärker die volle positive Pumpspannung U_Pump an die Pumpzelle. Sobald die Pumpzelle der Sonde sich genügend erwärmt hat, setzt aufgrund von U_Pump auch ein größerer Pumpstrom I_Pump ein, der den Hohlraum von Sauerstoff entleert. Dieser Vorgang tritt ein, obwohl die richtige Gaskonzentration LAMBDA = 1 bereits zu Anfang vorliegt.

Der in der Fig. 3a zusätzlich gestrichelt eingezeichnete Verlauf 204 von U_Nernst ergäbe sich im Übrigen mit erfindungsgemäß niederohmig angekoppelter, gepumpter Referenz, bspw. bei einem an 650 mV anliegenden Widerstand der Größe 10 kOhm.

Wie in der Fig. 3c zu ersehen, zeigt das Ausgangssignal U_Sonde, das aus I_Pump ermittelt wird, einen Überschwinger 208 in Richtung "mager", der die Regelung stört. Anschließend muss der Sauerstoff wieder aufgefüllt werden, es zeigt sich dabei meist ein kleinerer überschwinger in Richtung "fett" 210.

Im Falle des Betriebs mit gepumpter Referenz liegt die Nernstspannung U_Nernst bei +5V, solange der Innenwiderstand der Nernstzelle noch sehr groß ist. Sobald der Innenwiderstand jedoch abnimmt, gewinnt die wegen der kalten Sonde noch zu niedrige Nernstspannung U_Nernst und zieht das Ausgangssignal U_Sonde unter 450 mV. Auch hier zeigt das Ausgangssignal U_Sonde einen Überschwinger 212 in Richtung "mager". Erst bei sehr großer Auslegung des Referenzpumpstroms I_Pump_Ref der gepumpten Referenz zeigt die Sonde einen Überschwinger in Richtung "fett".

Es sind ferner der Start bei kompaktem Aufbau (siehe deutsche Patentanmeldung DE 199 41 051), der Start im mageren Abgas und der Start im fetten Abgas zu unterscheiden. Beim Start bei kompaktem Aufbau wird die Pumpzelle besonders früh erwärmt. Dadurch wird der Überschwinger noch vergrößert, da die Regelabweichung früher in einen Pumpstrom umgesetzt wird. Beim Start im extrem mageren Abgas entspricht der Überschwinger schon dem erforderlichen Pumpstrom und fällt daher als Fehler weniger ins Gewicht. Allerdings wird auch dabei zuviel Sauerstoff aus dem Hohlraum gepumpt. Beim Start im fetten Abgas ergibt sich ohne Vorsteuerung bei schnell erwärmter Pumpzelle noch ein Magerüberschwinger. Nur bei fetter Vorsteuerung oder beim gepumpten Betrieb ergibt sich ein Überschwinger des Ausgangssignals U_Sonde in Richtung fett.

Der Betrieb der Pumpzelle mit voller Pumpspannung U_Pump belastet besonders bei Sauerstoffmangel im Hohlraum das als Keramikkörper der Sonde vorgesehene Zirkonoxid. Es kann dabei im Extremfall, falls die Pumpspannung nicht begrenzt ist, zu Schwarzverfärbungen kommen. Insbesondere bei dauerndem Start im fetten Abgas kommt es aufgrund einer Polarisation der Elektroden zu einem erhöhten Pumpspannungsbedarf.

Ein Abschalten der Pumpspannung U_Pump mittels eines Steuerprogramms in den ersten 15 Sekunden bis zur Betriebsbereitschaft der Nernstzelle wäre technisch aufwändig und eine Implementierung zudem stark applikationsabhängig.

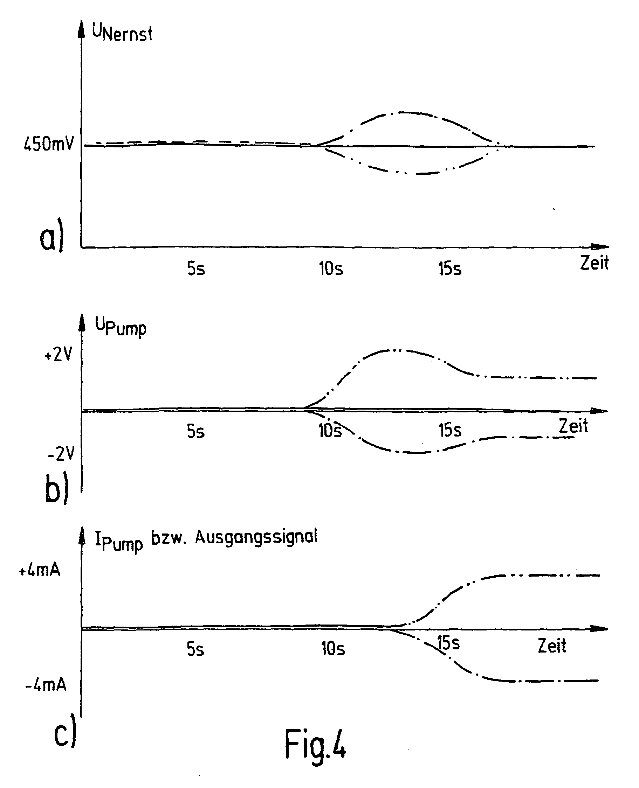

Die Figuren 4a - c zeigen an unterschiedlichen Messpunkten der in der Fig. 1 gezeigten Schaltung sich ergebende Spannungsverläufe der Nernstspannung U_Nernst (Fig. 4a), der Pumpspannung (Fig. 4b) und des Pumpstromes (Fig. 4c) bei einer erfindungsgemäßen Vorsteuerung bei LAMBDA = 1. In diesen Figuren werden jeweils beim fetten und mageren Startbetrieb des Motors sich ergebende Messkurven der genannten Größen verglichen.

Mittels der Vorsteuerung wird die Nernstspannung erfindungsgemäß solange nahe dem Nennwert der Referenzspannung gehalten, bis die Nernstspannung ein tatsächliches Maß für die Sauerstoffkonzentration im Hohlraum der Pumpzelle ist. Das Kriterium, dass die Nernstspannung ein tatsächliches Maß für die Sauerstoffkonzentration im Hohlraum der Pumpzelle ist, ist dadurch gegeben, dass die sich ergebende Spannung der nach der Nernstgleichung berechneten Spannung entspricht. Dies wird bspw. über das Absinken des Innenwiderstandes der Nernstspannungsquelle unter einen vorgegebenen Wert von z.B. 300 Ohm detektiert.

Je näher die Nernstspannung am Nennwert der Referenzspannung liegt, desto geringer ist die Abweichung der Nernstspannung, weil sich nur dann ein Ionenstrom einstellt, der zu dem in der Nernstgleichung beschriebenen Gleichgewicht führt. Je geringer die Abweichung der über die Vorsteuerung eingeprägten Nernstspannung vom Nennwert der Referenzspannung ist, um so geringer sind die Abweichungen der Pumpspannung und daraus folgend des Ausgangssignals von seinem der Abgaszusammensetzung entsprechenden Endwert. Über den Verstärkungsfaktor des Pumpstromreglers ergibt sich ein Grenzwert für die zuletzt genannten Abweichungen.

Die besagte Konstant-Haltung der Nernstspannung erfolgt insbesondere mittels Eingriffes in die Eingangsgröße der Regelschleife für den Pumpstrom. Die Vorteile dieser Vorgehensweise gegenüber dem Stand der Technik liegen in ihrer Anwendbarkeit auf Breitband-Lambdasonden, in der Verminderung der genannten Polarisation der Pumpelektroden sowie ihrer Wirksamkeit sowohl im mageren als auch im fetten Hochlauf des Katalysators während der Startphase des Motors. In speziellen Applikationen wird der Motor während des Hochlaufes fett oder mager betrieben. Dabei kommt es bei der Breitbandsonde zu besonders großen Abweichungen (siehe Fig. 3c). Diese werden aber gerade in der erfindungsgemäßen Betriebsweise vermieden (siehe Fig. 4c).

Bei dem in der Fig. 4a gezeigten Spannungsverlauf wird eine Vorsteuerung der Sonde auf 450 mV durch den genannten ohmschen Widerstand erzeugt. Hierbei wird der Anschluss der Referenzelektrode im Steuergerät (Fig. 1) über einen Widerstand von 1 bis 100 kOhm an die von der Auswerteschaltung, bspw. einem Auswerte-IC, erzeugte Referenzspannung von 450 mV gelegt, mit der sie über einen Komparator der Schaltung verglichen wird. Der Widerstand wird so ausgelegt, dass die Nernstspannung U_Nernst nahe 450 mV bleibt, solange die Nernstspannung bei LAMBDA = 1 noch nicht 450 mV betragen würde. Vorzugsweise wird ein Widerstand von 10 kOhm verwendet. Wegen des Komparators darf die Nernstspannung nicht exakt 450 mV betragen. Bei LAMBDA ungleich 1 zeigt sich gegenüber dem Stand der Technik lediglich ein betragsmäßig geringer Über- bzw. Unterschwinger der Nernstspannung. Bei LAMBDA = 1 verschwinden die Über-bzw. Unterschwinger sogar völlig.

Alternativ zu der vorbeschriebenen Schaltung kann bei sogenannter "gepumpter Referenz" ein Widerstand der Größe 100 kOhm gegen eine Spannung von +2,5 V gewählt werden, um 20 µA Pumpstrom einzuspeisen. Wiederum alternativ kann bei gepumpter Referenz mit niederohmiger Ankopplung vorgesehen sein, dass der Widerstand für die gepumpte Referenz an eine nur geringfügig erhöhte Spannungsquelle von z.B. 650 mV gelegt wird, wobei sich bei einem 10 kOhm Vorsteuer-/Pumpwiderstand ein Pumpstrom von 20 µA ergibt (siehe gestrichelte Linie in Fig. 4a). Je niederohmiger die Ankopplung an die Spannungsquelle ist, desto geringer ist die Abweichung im Warmlauf des Motors, und zwar entsprechend den oben ausführlich beschriebenen Prinzipien bei der erfindungsgemäßen Vorsteuerung.

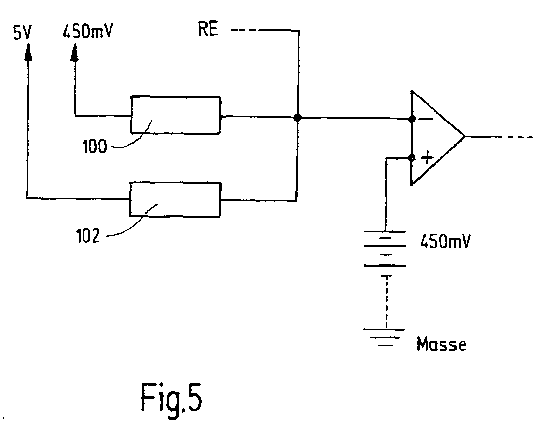

Die Höhe der genannten Spannung U ergibt sich im Übrigen aus dem Zusammenhang U = R_Ankopplung X 20 µA + U_Nernst. Die Spannung U hat dabei, bezogen auf die virtuelle Masse der Steuerschaltung, den Wert 2,5 V. Des Weiteren sind prinzipiell auch alle geeigneten Kombinationsnetzwerke hier anwendbar. Ein Ausführungsbeispiel eines solchen Netzwerkes zeigt die Fig. 5. Das in der Fig. 5 gezeigte Widerstandspaar 100, 102 lässt sich mathematisch in einen bestimmten Widerstand und eine bestimmte Spannung transformieren.

In Ergänzung zu Fig. 4a, zeigt die Fig. 4b den zugehörigen Spannungsverlauf der Pumpspannung. Die gepumpte Referenz bleibt in der bekannten Weise erhalten. Da in dem Zeitintervall bis etwa 10 s keine Pumpbelastung eintritt, erfolgt auch nicht die genannte Polarisation der Elektroden.

In der Fig. 4c ist der zugehörige Pumpstrom zu Fig. 4a dargestellt. Der Pumpstrom stellt das eigentliche Ausgangssignal der Regelung dar und weist sowohl bei fettem als auch magerem Betrieb erfindungsgemäß keinen Überschwinger auf. Die beiden bei etwa 15 s beginnenden, flach auslaufenden Kurvenverläufe stellen dabei das im Warmbetrieb der Sonde sich jeweils ergebende Messsignal dar.

## Patentansprüche

1. Verfahren zum Betrieb einer Breitband-Lambdasonde, wobei der Sauerstoffanteil eines Abgases anhand eines Vergleiches einer Nernstspannung mit einer einen Nennwert habenden Referenzspannung ermittelt wird und bei einer vorliegenden Abweichung ein Pumpstrom in einen Hohlraum einer Pumpzelle eingespeist wird, wobei eine an der Pumpzelle anliegende elektrische Spannung so geregelt wird, dass in dem Hohlraum LAMBDA = 1 gilt, und wobei der Pumpstrom ein Maß für den Wert von LAMBDA in dem Abgas ist, **dadurch gekennzeichnet, dass** in einer Kaltphase der Breitband-Lambdasonde die Nernstspannung mittels einer Vorsteuerung solange nahe dem Nennwert der Referenzspannung gehalten wird, bis die Nernstspannung ein tatsächliches Maß für die Sauerstoffkonzentration im Hohlraum der Pumpzelle ist.

2. Verfahren nach Anspruch 1, **dadurch gekennzeichnet, dass** die Vorsteuerung durch einen ohmschen Widerstand erfolgt, wobei der Anschluss einer Referenzelektrode über den Widerstand an die von einer Auswerteschaltung erzeugte Referenzspannung gelegt wird.

3. Verfahren nach Anspruch 2, **dadurch gekennzeichnet, dass** der ohmsche Widerstand 1 bis 100 kOhm, bevorzugt 10 kOhm, beträgt.

4. Verfahren nach einem der vorhergehenden Ansprüche, **dadurch gekennzeichnet, dass** die Vorsteuerung mittels einer gepumpten Referenz erfolgt, wobei ein Widerstand mit 100 kOhm gegen +5V gewählt wird, um 20 µA Pumpstrom einzuspeisen.

5. Verfahren nach einem der vorhergehenden Ansprüche, **dadurch gekennzeichnet, dass** die Vorsteuerung mit einer gepumpten Referenz kombiniert wird, wobei der Widerstand für die gepumpte Referenz an eine nur geringfügig erhöhte Spannungsquelle von bevorzugt 650 mV für 20 µA Pumpstrom und 10 kOhm Vorsteuer-/Pumpwiderstand gelegt wird.

6. Steuergerät mit einer Breitband-Lambdasonde, bei der der Sauerstoffanteil eines Abgases anhand eines Vergleiches einer Nernstspannung mit einer einen Nennwert aufweisenden Refe-renzspannung ermittelt wird und bei einer vorliegenden Abweichung ein Pumpstrom in einen Hohlraum einer Pumpzelle eingespeist wird, wobei eine an der Pumpzelle anliegende elektrische Spannung so geregelt wird, dass in dem Hohlraum LAMBDA = 1 gilt, und wobei der Pumpstrom ein Maß für den Wert von LAMBDA in dem Abgas ist, **gekennzeichnet durch** einen zwischen dem Anschluss einer Referenzelektrode und einer Referenzspannung eines Komparators angeordneten ohmschen Widerstand, der die Nernstspannung in einer Kaltphase der Breitband-Lambdasonde nahe dem Nennwert der Referenzspannung hält, solange die Nernstspannung bei LAMBDA = 1 noch nicht den Nennwert beträgt.

7. Steuergerät nach Anspruch 6, **dadurch gekennzeichnet, dass** der ohmsche Widerstand einen Wert im Bereich von 1 bis 100 kOhm, bevorzugt 10 kOhm, aufweist.

## Claims

1. Method for operating a broadband lambda probe, the oxyen content of an exhaust gas being determined by means of a comparison of a Nernst voltage with a reference voltage having a rated value, and when a deviation is present a pumping current being fed into a cavity in a pumping cell, wherein an electric voltage which is present at the pumping cell is regulated in such a way that LAMBDA = 1 in the cavity, and wherein the pumping current is a measure of the value of LAMBDA in the exhaust gas, **characterized in that**, in a cold phase of the broadband lambda probe, the Nernst voltage is kept close to the rated value of the reference voltage by means of a pilot control until the Nernst voltage is an actual measure of the oxygen concentration in the cavity of the pumping cell.

2. Method according to Claim 1, **characterized in that** the pilot control is carried out by means of an ohmic resistance, wherein the terminal of a reference electrode is connected via the resistor to the reference voltage which is produced by an evaluation circuit.

3. Method according to Claim 2, **characterized in that** the ohmic resistance is 1 to 100 kOhm, preferably 10 kOhm.

4. Method according to one of the preceding claims, **characterized in that** the pilot control is carried out by means of a pumped reference, wherein a resistance with 100 kOhm to +5V is selected in order to feed in 20 µA pumping current.

5. Method according to one of the preceding claims, **characterized in that** the pilot control is combined with a pumped reference, wherein the resistance for the pumped reference is connected to an only slightly increased voltage source of preferably 650 mV for 20 µA pumping current and 10 kOhm pilot control/pumping resistance.

6. Control device having a broadband lambda probe in which the oxygen content of an exhaust gas is determined by means of a comparison of a Nernst voltage with a reference voltage having a rated value, and when there is a deviation a pumping current is fed into a cavity in a pumping cell, wherein an electric voltage which is present at the pumping cell is regulated in such a way that LAMBDA = 1 in the cavity, and wherein the pumping current is a measure of the value of LAMBDA in the exhaust gas, **characterized by** an ohmic resistance which is arranged between the terminal of a reference electrode and a reference voltage of a comparator and which keeps the Nernst voltage, in a cold phase of the broadband lambda probe, near to the rated value of the reference voltage as long as the Nernst voltage does not yet have the rated value at LAMBDA = 1.

7. Control device according to Claim 6, **characterized in that** the ohmic resistance has a value in the range from 1 to 100 kOhm, preferably 10 kOhm.

## Revendications

1. Procédé pour faire fonctionner une sonde lambda à large bande, selon lequel
la proportion d'oxygène d'un gaz d'échappement est établie en comparant une tension de Nernst à une tension de référence qui a une valeur nominale et, s'il y a un écart, un courant de pompe est apporté dans une cavité d'une cellule de pompe, une tension électrique appliquée à la cellule de pompe est réglée de telle manière qu'on ait lambda = 1 dans la cavité, et le courant de pompe représente une mesure pour la valeur de lambda dans le gaz d'échappement,
**caractérisé en ce que**
dans une phase à froid de la sonde lambda à large bande, la tension de Nernst est maintenue proche de la valeur nominale de la tension de référence à l'aide d'une commande pilote jusqu'à ce que la tension de Nernst soit une mesure effective pour la concentration en oxygène dans la cavité de la cellule de pompe.

2. Procédé selon la revendication 1,
**caractérisé en ce que**
la commande pilote est réalisée par une résistance ohmique, le raccordement d'une électrode de référence étant soumis au moyen de la résistance à une tension de référence produite par un circuit d'exploitation.

3. Procédé selon la revendication 2,
**caractérisé en ce que**
la résistance ohmique est comprise entre 1 et 100 kOhm, est de préférence de 10 kOhm.

4. Procédé selon l'une des revendications précédentes,
**caractérisé en ce que**
la commande pilote est réalisée à l'aide d'une référence pompée, la résistance choisie étant de 100 kOhm pour +5 V pour produire un courant de pompe de 20 µA.

5. Procédé selon l'une des revendications précédentes,
**caractérisé en ce que**
la commande pilote est combinée à une référence pompée, la résistance pour la référence pompée étant soumise à une source de tension qui n'est que légèrement augmentée, cette tension étant de préférence de 650 mV, pour un courant de pompe de 20 µA et une résistance de commande pilote / de pompe de 10 kOhm.

6. Appareil de commande muni d'une sonde lambda à large bande, dans lequel
la proportion d'oxygène d'un gaz d'échappement est établie en comparant une tension de Nernst à une tension de référence qui a une valeur nominale et, s'il y a un écart, un courant de pompe est apporté dans une cavité d'une cellule de pompe,
une tension électrique appliquée à la cellule de pompe est réglée de telle manière qu'on ait lambda = 1 dans la cavité et
le courant de pompe représente une mesure pour la valeur de lambda dans le gaz d'échappement,
**caractérisé par**
une résistance ohmique, placée entre le raccordement d'une électrode de référence et une tension de référence d'un comparateur, et qui dans une phase à froid de la sonde lambda à large bande maintient la tension de Nernst proche de la valeur nominale de la tension de référence tant que la tension de Nernst n'atteint pas encore la valeur nominale pour lambda = 1.

7. Appareil de commande selon la revendication 6,
**caractérisé en ce que**
la résistance ohmique a une valeur comprise entre 1 et 100 kOhm, est de préférence 10 kOhm.
